# EUROPEAN PATENT APPLICATION

(11) **EP 4 507 419 A1**
(43) Date of publication of application: **12.02.2025**
(21) Application number: 22936147.2
(22) Date of filing: 07.04.2022
(51) Int. Cl.: H04W 72/04

(54) **COMMUNICATION METHOD AND APPARATUS, AND ELECTRONIC DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2022/085630
(87) International publication number: WO 2023/193204

(57) **Abstract**

The embodiments of the present disclosure relate to the technical field of mobile communications. Provided are a communication method and apparatus, and an electronic device and a storage medium. The communication method comprises: determining a sensing sounding establishment request frame, wherein the sensing sounding establishment request frame comprises a first identification bit, the first identification bit indicates a sensing sounding type of a wireless local area network (WLAN) sensing sounding process, and the sensing sounding type comprises trigger-based (TB-based) sounding or non-trigger-based (Non-TB based) sounding; and sending the sensing sounding establishment request frame. Provided in the embodiments of the present disclosure is a mode for indicating a sensing sounding type of a WLAN sensing process.

## Description

### TECHNICAL FIELD

Embodiments of the present disclosure relate to a field of mobile communication technology, and more particularly, the embodiments of the present disclosure relate to a communication method and a communication apparatus, an electronic device, and a storage medium.

### BACKGROUND

With rapid development of mobile communication technology, Wireless Fidelity (Wi-Fi) technology has made great progress in transmission rate, throughput, etc. At present, what is studied in Wi-Fi technology includes, for example, 320 Mhz bandwidth transmission, aggregation and coordination of multiple frequency bands, etc. Its main application scenarios include video transmission, augmented reality (AR), virtual reality (VR), etc.

In the Wi-Fi technologies currently being studied, wireless local area network (WLAN) sensing technology may be supported, for example, in the application scenarios such as location discovery, proximity detection, and presence detection in dense environments (such as home and corporate environments). A sensing measurement type typically includes a Triggered Based frame (Triggered Based Sounding, TB or TB-based) sensing manner and a non-triggered based, Non-TB based, frame type. Therefore, it is necessary to provide an approach to indicate the sensing measurement type of WLAN sensing process.

### SUMMARY

The embodiments of the present disclosure provides a communication method and a communication apparatus, an electronic device, and a storage medium so as to provide an approach to indicate the sensing measurement type of WLAN sensing process.

In a first aspect, the embodiments of the present disclosure provide a communication method performed by a sensing initiator, the method includes:
determining a sensing measurement setup request frame; where the sensing measurement setup request frame includes a first identification byte, the first identification byte indicates a sensing measurement type of a wireless local area network WLAN sensing measurement process; and the sensing measurement type includes a triggered based, TB-based, frame or a non-triggered based, Non-TB based, frame; and
sending the sensing measurement setup request frame.

In another aspect, the embodiments of the present disclosure also provide a communication method performed by a sensing responder, the method includes:
receiving a sensing measurement setup request frame; where the sensing measurement setup request frame includes a first identification byte, the first identification byte indicates a sensing measurement type of a wireless local area network WLAN sensing measurement process; and the sensing measurement type includes a triggered based, TB-based, frame or a non-triggered based, Non-TB based, frame;
sending, in response to the sensing measurement setup request frame, a sensing measurement response message frame to an initiator.

In another aspect, the embodiments of the present disclosure also provide an electronic device, which is a sensing initiator, including:
a determination module, configured to determine a sensing measurement setup request frame; where the sensing measurement setup request frame includes a first identification byte, the first identification byte indicates a sensing measurement type of a wireless local area network WLAN sensing measurement process; and the sensing measurement type includes a triggered based, TB-based, frame or a non-triggered based, Non-TB based, frame;
a sending module, configured to send the sensing measurement setup request frame.

In another aspect, the embodiments of the present disclosure also provide an electronic device, which is a sensing responder, including:
a receiving module, configured to receive a sensing measurement setup request frame; where the sensing measurement setup request frame includes a first identification byte, the first identification byte indicates a sensing measurement type of a wireless local area network WLAN sensing measurement process; and the sensing measurement type includes a triggered based, TB-based, frame or a non-triggered based, Non-TB based, frame;
a response module, configured to send a sensing measurement response message frame to an initiator in response to the sensing measurement setup request frame.

In another aspect, the embodiments of the present disclosure also provide a communication apparatus performed by the sensing initiator, and the apparatus includes:
a wireless frame determination module, configured to determine a sensing measurement setup request frame; where the sensing measurement setup request frame includes a first identification byte, the first identification byte indicates a sensing measurement type of a wireless local area network WLAN sensing measurement process; and the sensing measurement type includes a triggered based, TB-based, frame or a non-triggered based, Non-TB based, frame;
a wireless frame sending module, configured to send the sensing measurement setup request frame.

In another aspect, the embodiments of the present disclosure also provide a communication apparatus performed by a sensing responder, and the apparatus includes:
a wireless frame receiving module, configured to receive a sensing measurement setup request frame; where the sensing measurement setup request frame includes a first identification byte, the first identification byte indicates a sensing measurement type of a wireless local area network WLAN sensing measurement process; and the sensing measurement type includes a triggered based, TB-based, frame or a non-triggered based, Non-TB based, frame;
a wireless frame response module, configured to send a sensing measurement response message frame to an initiator in response to the sensing measurement setup request frame.

The embodiments of the present disclosure also provide an electronic device including a memory, a processor, and a computer program stored on the memory and executable on the processor. When the processor executes the program, it implements one or more of the methods described in the embodiments of the present disclosure.

The embodiments of the present disclosure also provide a computer-readable storage medium on which a computer program is stored. When the computer program is executed by a processor, it implements one or more of the methods described in the embodiments of the present disclosure. In the embodiments of the present disclosure, the sensing initiator determines the sensing measurement setup request frame and sends the sensing measurement setup request frame; where the sensing measurement setup request frame includes a first identification byte, which indicates the sensing measurement type of the wireless local area network (WLAN) sensing measurement process. The embodiments of the present disclosure provide an approach to indicate the sensing measurement type of WLAN sensing process, to improve the WLAN sensing process.

Additional aspects and advantages of the embodiments of the present disclosure will be partially provided in the description below, which will become apparent from the description below, or will be learned through the practice of the present disclosure.

### BRIEF DESCRIPTION OF THE DRAWINGS

In order to more clearly illustrate the technical solutions of the embodiments of the present disclosure, the drawings that are to be used in the description of the embodiments of the present disclosure will be briefly introduced below. Obviously, the drawings in the following description are only some embodiments of the present disclosure, and those of ordinary skill in the art may obtain other drawings based on these drawings without paying creative effort.
FIG. 1 is a first flowchart of a communication method provided in an embodiment of the present disclosure;
FIG. 2 is a first schematic diagram of a first example according to an embodiment of the present disclosure;
FIG. 3 is a second schematic diagram of the first example according to an embodiment of the present disclosure;
FIG. 4 is a third schematic diagram of the first example according to an embodiment of the present disclosure;
FIG. 5 is a schematic diagram of a second example according to an embodiment of the present disclosure;
FIG. 6 is a schematic diagram of a third example according to an embodiment of the present disclosure;
FIG. 7 is a schematic diagram of a fourth example according to an embodiment of the present disclosure;
FIG. 8 is a second flowchart of a communication method provided in an embodiment of the present disclosure;
FIG. 9 is a first schematic structural diagram of a communication apparatus provided in an embodiment of the present disclosure;
FIG. 10 is a second schematic structural diagram of a communication apparatus provided in an embodiment of the present disclosure;
FIG. 11 is a schematic diagram of a structure of an electronic device provided in an embodiment of the present disclosure.

### DETAILED DESCRIPTION

In the embodiments of the present disclosure, the term "and/or" describes association relationship of associated objects, indicating that there may be three types of relationships. For example, A and/or B may indicate three cases where A exists alone, A and B exist at the same time, and B exists alone. The character "/" generally indicates that the related objects before and after this character are in an "or" relationship.

The term "a plurality of" in the embodiments of the present disclosure refers to two or more than two, and other quantifiers are similar thereto.

The illustrative embodiments will be described in detail herein, examples of which are shown in the accompanying drawings. When the drawings are involved in the following description, the same numbers in different drawings represent the same or similar elements, unless otherwise indicated. The embodiments described in the following illustrative embodiments do not represent all embodiments consistent with the present disclosure. Instead, they are merely examples of devices and methods consistent with some of aspects of the present disclosure as detailed in the appended claims.

The terms used in the present disclosure are for the purpose of describing specific embodiments only and are not intended to restrict the present disclosure. The singular forms of "a", "said" and "the" used in the present disclosure and the appended claims are also intended to include plural forms unless the context clearly indicates otherwise. It should also be understood that the term "and/or" used herein refers to and includes any or all possible combinations of one or more associated items listed.

It should be understood that although the terms of first, second, third, etc. may be used in the present disclosure to describe various information, such information should not be limited to these terms. These terms are only used to distinguish the same type of information from each other. For example, without departing from the scope of the present disclosure, the first information may also be referred to as the second information, and similarly, the second information may also be referred to as the first information. Depending on the context, for example, the wording "if' used herein may be interpreted as "at the time of ..." or "when ..." or "in response to determining".

A clear and complete description of technical solutions in the embodiments of the present disclosure will be provided below in combination with the drawings in the embodiments of the present disclosure. Obviously, the described embodiments are only a part of the embodiments of the present disclosure, but not all of the embodiments. Based on the embodiments in the present disclosure, all other embodiments obtained by those of ordinary skill in the art without paying creative effort fall within the protection scope of the present disclosure.

The embodiments of the present disclosure provide a communication method and a communication apparatus, an electronic device, and a storage medium, which are used to provide an approach for indicating the sensing measurement type of WLAN sensing process.

The method and the device are based on the same inventive concept. Since the principles for the method and the device to solve the problem are similar, the implementations of the device and the method may be referenced with each other, and the repeated parts will not be omitted.

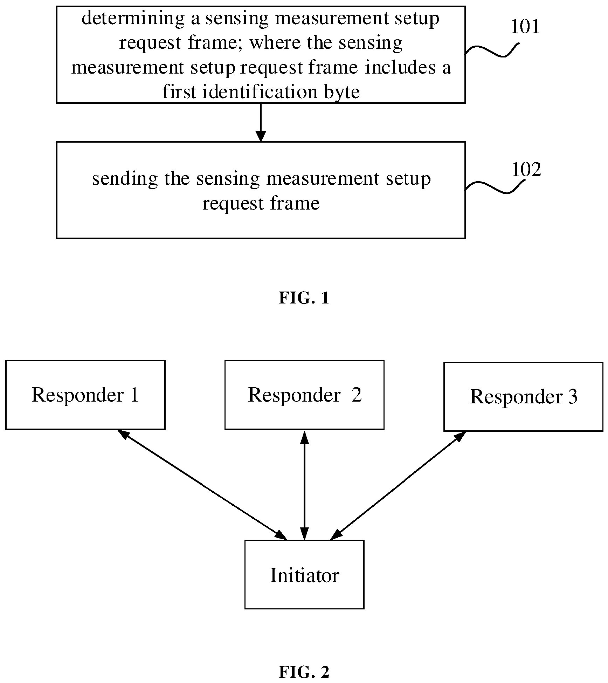

As shown in FIG. 1, embodiments of the present disclosure provide a communication method. Optionally, the method may be performed by an electronic device, and the electronic device is the sensing initiator; the method may include the following steps:
in step 101: a sensing measurement setup request frame is determined; where the sensing measurement setup request frame includes a first identification byte, the first identification byte indicates a sensing measurement type of a wireless local area network WLAN sensing measurement process; and the sensing measurement type includes a triggered based, TB-based, frame or a non-triggered based, Non-TB based, frame; and that is, the sensing measurement process initiated by the sensing initiator is identified as TB-based or Non-TB based.

As a first example, referring to FIG. 2 to FIG. 4, a WLAN Sensing architecture and a WLAN Sensing process performed by the communication method provided in the embodiments of the present disclosure are introduced first.

FIG. 2 is a schematic diagram showing the architecture for WLAN Sensing (process), in which a sensing initiator (or an initiator) initiates WLAN Sensing (for example, initiates a WLAN sensing session), and there may be a plurality of sensing responders (or sensing receivers) or responders that respond to it, such as responder 1, responder 2, and responder 3 as shown in FIG. 2. When the sensing initiator initiates the WLAN Sensing, a plurality of associated or unassociated sensing responders for the WLAN Sensing may respond to it.

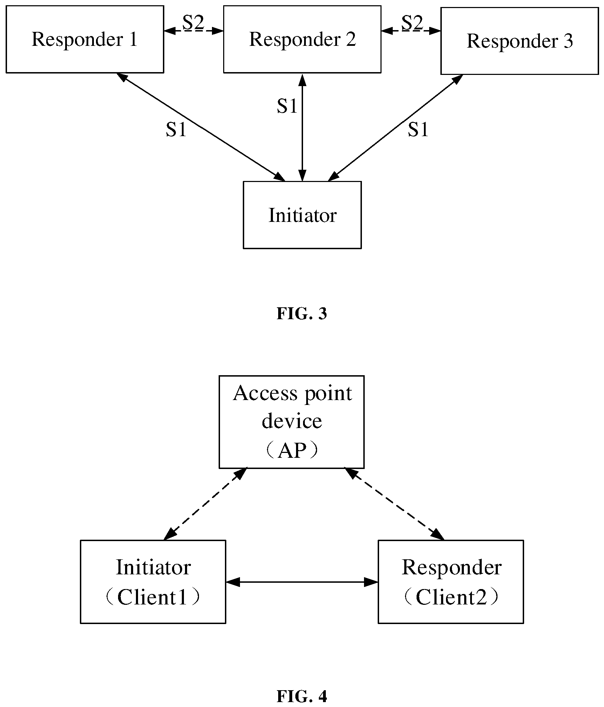

Referring to FIG. 3, the sensing initiator communicates with the sensing responder via communication connection, such as communication connection S1 as shown, and the sensing responders communicate with each other via communication connection S2.

Each of the sensing initiators may be a client, and each of the sensing responders (in this example, sensing responders 1 to 3) may be a station device (STA) or an access point device (AP). In addition, STA and AP may serve multiple roles in the WLAN sensing process. For example, in the WLAN sensing process, STA may also serve as a sensing initiator, and the sensing initiator may be a sensing transmitter, a sensing receiver, or both, or neither. In the WLAN sensing process, the sensing responder may also be a sensing transmitter, a sensing receiver, or both.

As another architecture, as shown in FIG. 4, the sensing initiator and the sensing responder may both be clients, and they may perform communication by connecting to the same access point device (AP). In FIG. 4, Client 1 is the sensing initiator, and Client 2 is the sensing responder.

In general, the WLAN sensing process includes processes of a WLAN sensing session setup, a WLAN sensing measurement setup, and a WLAN sensing measurement termination, etc. In the process of the WLAN sensing measurement setup, the sensing initiator determines a Sensing Measurement Setup Request Frame and carries a first identification byte in the sensing measurement setup request frame, and the first identification byte is configured to indicate a sensing measurement type of the WLAN sensing measurement to be set up by the initiator; the sensing measurement type includes a triggered based, TB-based, frame or non-triggered based, Non-TB based, frame. For example, the TB-based approach uses an AP as the initiator (or a transmitter), while the Non-TB based approach uses a STA as the initiator (or a transmitter).

Optionally, one bit may be used in the sensing measurement setup request frame to indicate the sensing measurement type: for example, "0" indicates TB-based, "1" indicates Non-TB Based; or "1" indicates TB-based, "0" indicates Non-TB based.
in step 102: the sensing measurement setup request frame is sent.

The sensing initiator sends a sensing measurement setup request frame to a sensing responder (or a sensing receiver), indicating the sensing measurement type through the sensing measurement setup request frame, such that the sensing responder determines an operation to be executed according to the sensing measurement type. For example, in a case of TB-based, the responder receives a Null Data Packet Announcement (NDPA) frame or a trigger frame (TF-trigger); in a case of Non-TB Based, the responder receives the NDPA frame.

In the embodiments of the present disclosure, the sensing initiator determines the sensing measurement setup request frame and sends the sensing measurement setup request frame; where the sensing measurement setup request frame includes a first identification byte, which indicates the sensing measurement type of the wireless local area network (WLAN) sensing measurement process. The embodiments of the present disclosure provide an approach to indicate the sensing measurement type of WLAN sensing process, to improve the WLAN sensing process.

In an optional embodiment, the sensing measurement setup request frame includes a sensing measurement parameter information element.

The first identification byte is carried in the sensing measurement parameter information element, and identifies whether the sensing initiator initiates TB-based or Non-TB based.

The sensing measurement parameter information element further includes a transmitter indicator byte and a receiver indicator byte; the transmitter indicator byte indicates whether the sensing initiator is a sensing transmitter, and the receiver indicator byte indicates whether the sensing initiator is a sensing receiver.

In an optional embodiment, a communication method is performed by a sensing transmitter to determine a sensing measurement setup request frame, where the sensing measurement setup request frame includes a first identification byte, and the first identification byte indicates whether the wireless local area network (WLAN) sensing measurement process is a triggered based, TB-based, frame or a non-triggered based, Non-TB based, frame in a case that the first identification byte is a first parameter value, the sensing measurement parameter information element includes a Non-TB based information sub-element, and the WLAN sensing measurement process includes UL sounding.

Specifically, in a case that the first identification byte is the first parameter value, the sensing measurement parameter information element includes the Non-TB based information sub-element, that is, the sensing measurement type is Non-TB Based; the first parameter value indicates a scenario where only the UL sounding is included in a Non-TB Based scenario.

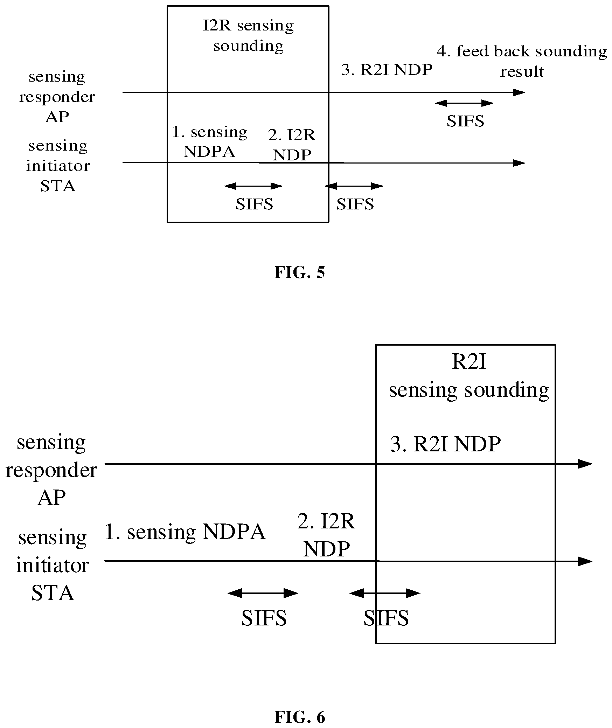

As a second example, referring to FIG. 5, the scenario where only the UL sounding is included in the Non-TB Based scenario is shown, and SIFS represents Short Inter Frame Space.

The WLAN sensing measurement process includes the UL sounding, as shown in FIG. 5, which includes I2R (Initiator To Responder) sensing measurement process, and the I2R is UL sounding; in the I2R sensing measurement (UL sounding) process, the sensing initiator STA first performs step 1, sending a sensing NDPA frame; then the sensing initiator STA performs step 2, sending I2R NDP frame. Afterwards, the sensing responder AP performs step 3, sending R2I NDP frame; then the AP performs step 4, sending a feedback message frame. In this process, both I2R NDP and R2I NDP participate in the sensing measurement.

In an optional embodiment, the transmitter indicator byte indicates that the initiator is a sensing transmitter, and the receiver indicator byte indicates that the initiator is not a sensing receiver, for example, the transmitter bit is set to "1" and the receiver bit is set to "0"; and that is, in the scenario where only UL sounding is included in the Non-TB based, the identity information of the initiator is the sensing transmitter, not the sensing receiver.

Thus, the first parameter value identifies that the initiator sends R2I NDP, as shown in step 3 of FIG. 5.

In an optional embodiment, a communication method is performed by a sensing transmitter to determine a sensing measurement setup request frame, where the sensing measurement setup request frame includes a first identification byte, and the first identification byte indicates whether the wireless local area network (WLAN) sensing measurement process is a triggered based, TB-based, frame or a non-triggered based, Non-TB based, frame in a case that the first identification byte is a second parameter value, the sensing measurement parameter information element includes a Non-TB based information sub-element, and the WLAN sensing measurement process includes DL sounding. The second parameter value indicates a scenario where only DL sounding is included in Non-TB based. As a third example, referring to FIG. 6, which illustrates the above scenario, where in the R2I (Receiver To Initiator) sensing measurement (DL sounding) process, the sensing initiator STA first performs step 1, sending a sensing NDPA frame; then performs step 2, sending I2R NDP frame, where I2R NDP does not participate in the sensing measurement. Afterwards, the sensing responder AP performs step 3, performing downlink sensing measurement, sending R2I NDP frame, where R2I NDP participates in the sensing measurement. Optionally, thereafter, the AP may send feedback message frames (not shown in FIG. 6).

Furthermore, in this scenario, the transmitter indicator byte indicates that the initiator is not a sensing transmitter, and the receiver indicator byte indicates that the initiator is a sensing receiver; in the scenario where only DL sounding is included in the Non-TB based, the identity information of the initiator only serves as the sensing receiver, not the transmitter. For example, the transmitter bit is set to "0" and the receiver bit is set to "1".

The second parameter value identifies that the initiator sends I2R NDP, as shown in step 2 of FIG. 6.

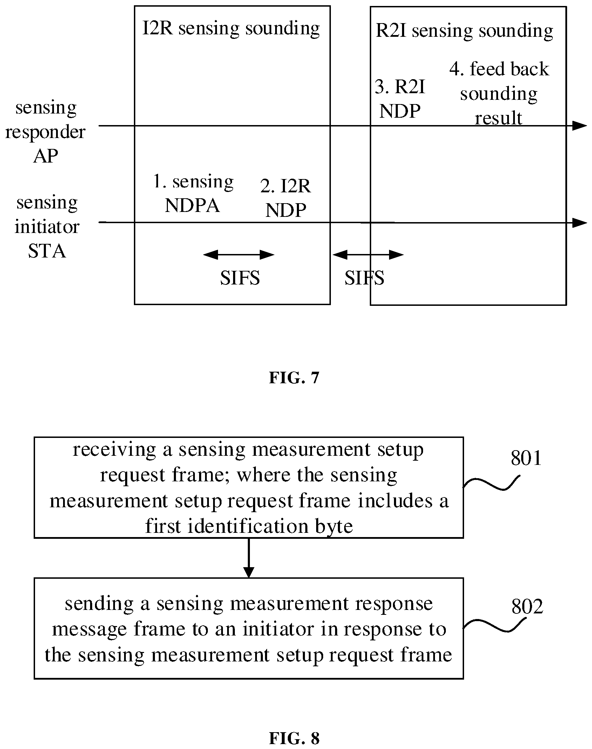

In an optional embodiment, a communication method is performed by a sensing transmitter to determine a sensing measurement setup request frame, where the sensing measurement setup request frame includes a first identification byte, and the first identification byte indicates whether the wireless local area network (WLAN) sensing measurement process is a triggered based, TB-based, frame or a non-triggered based, Non-TB based, frame in a case that the first identification byte is a third parameter value, the sensing measurement parameter information element includes a Non-TB based information sub-element, and the WLAN sensing measurement process includes UL sounding and DL sounding; the third parameter value is a scenario where both UL sounding and DL sounding are included in Non-TB based. As a fourth example, referring to FIG. 7, which illustrates the above scenario, where in the I2R sensing measurement (UL sounding) process, the sensing initiator STA first performs step 1, sending a sensing NDPA frame; then performs step 2, sending I2R NDP frame, where I2R NDP participates in sensing measurement. In the R2I sensing measurement (DL sounding) process, the sensing responder may first perform step 3, sending R2I NDP frame, where R2I NDP does not participate in the sensing measurement; then the AP performs step 4, sending a feedback message frame to provide a feedback on a sensing measurement result.

Furthermore, in this scenario, the transmitter indicator byte indicates that the initiator is a sensing transmitter, and the receiver indicator byte indicates that the initiator is a sensing receiver; in the scenario that includes both UL sounding and DL sounding, the identity of the initiator serves as both the sensing transmitter and sensing receiver. For example, the transmitter bit is set to "1" and the receiver bit is set to "1".

Furthermore, the third parameter value identifies that the initiator sends I2R NDP (as shown in step 2 of FIG. 7) and sends R2I NDP (as shown in step 3 of FIG. 7).

Optionally, in the embodiments of the present disclosure, the process of sending I2R NDP and the process of sending R2I NDP have a predetermined execution order, for example, by default, the I2R NDP process is earlier than the R2I NDP process; or the sensing measurement parameter information element includes first order indication information that indicates an execution order, such as using a sequence bit to identify the order, for example, the first order indication information is "1", indicating that the I2R NDP process is earlier than the R2I NDP process; the first order indication information is "0", indicating that the R2I NDP process is earlier than the I2R NDP process.

In an optional embodiment, a communication method is performed by a sensing transmitter to determine a sensing measurement setup request frame, where the sensing measurement setup request frame includes a first identification byte, and the first identification byte indicates whether the wireless local area network (WLAN) sensing measurement process is a triggered based, TB-based, frame or a non-triggered based, Non-TB based, frame in a case that the first identification byte is a fourth parameter value, the sensing measurement parameter information element includes a TB-based information sub-element, and the WLAN sensing measurement process includes downlink sensing measurement process, such as NDPA sounding.

As a fifth example, a format of the sensing measurement setup request frame is shown in Table 1 below:

**Table 1:**

| Element Content | Category | Public Action | Dialogue Token | Sensing Measurement Setup Identification (Measurement Setup ID) | Sensing Measurement Parameter |
|---|---|---|---|---|---|
| Byte count (Octets) | 1 | 1 | 1 | TBD (to be determined) | TBD |

The sensing measurement setup request frame includes 5 elements, namely: Category, Public Action, Dialogue Token, Measurement Setup ID, and Sensing Measurement Parameter.

Furthermore, the sensing measurement parameter information element includes the TB-based information sub-element, an element format of the sensing measurement parameter information element is shown in Table 2 below:

**Table 2:**

| Content | Element ID | Length | Element ID Extension | TBD (portable TB-based information sub-elements) |
|---|---|---|---|---|
| Byte count (Octets) | 1 | 1 | TBD (to be determined) | TBD |

As shown in Table 2, the first identification byte may be included the Element ID Extension, and in the case that the first identification byte is the fourth parameter value, the sensing measurement parameter information element includes the TB-based information sub-element, for example, the TB-based information sub-element may be carried in the TBD subfield (subdomain). Moreover, the WLAN sensing measurement process includes NDPA sounding.

Furthermore, the transmitter indicator byte indicates that the initiator is a sensing transmitter, while the receiver indicator byte indicates that the initiator is not a sensing receiver. For example, referring to Table 3, a field format of the sensing measurement parameter information element is as follows:

**Table 3:**

| Content | Sensing Transmitter | Sensing Receiver | Measurement Report Type | TBD |
|---|---|---|---|---|
| Bits | 1 | 1 | TBD (to be determined) | TBD |

A sensing transmitter subfield in the Sensing Measurement Parameter field is set to "1", and it is identified that the sensing measurement parameter information element includes NDPA information sub-element, which is configured for the parameter information of the downlink sensing measurement; and the Sensing Receiver subfield is set to "0".

In an optional embodiment, a communication method is performed by a sensing transmitter to determine a sensing measurement setup request frame, where the sensing measurement setup request frame includes a first identification byte, and the first identification byte indicates whether the wireless local area network (WLAN) sensing measurement process is a triggered based, TB-based, frame or a non-triggered based, Non-TB based, frame in a case that the first identification byte is a fifth parameter value, the sensing measurement parameter information element includes a TB-based information sub-element, and the WLAN sensing measurement process includes an uplink sensing measurement process; that is, the sensing measurement type is TB-based; the fifth parameter value indicates a scenario where only TF sounding is included in the TB-based scenario.

Furthermore, the transmitter indicator byte indicates that the initiator is not a sensing transmitter, and the receiver indicator byte indicates that the initiator is a sensing receiver. Referring to Table 3, the Sensing Receiver subfield in the Sensing Measurement Parameter field is set to "1", and it is identified that the sensing measurement parameter information element includes the TF Sounding information sub-element for the parameter information of the downstream sensing measurement; and, the Sensing Transmitter subfield in the Sensing Measurement Parameter field is set to "0".

In an optional embodiment, a communication method is performed by a sensing transmitter to determine a sensing measurement setup request frame, where the sensing measurement setup request frame includes a first identification byte, and the first identification byte indicates whether the wireless local area network (WLAN) sensing measurement process is a triggered based, TB-based, frame or a non-triggered based, Non-TB based, frame in a case that the first identification byte is a sixth parameter value, the sensing measurement parameter information element includes a TB-based information sub-element, and the WLAN sensing measurement process includes downlink sensing measurement (NDPA sounding) and uplink sensing measurement (TF Sounding). That is, the sensing measurement type is TB-based; the sixth parameter value indicates a scenario where both NDPA sounding and TF sounding are included in the TB-based scenario.

Furthermore, the transmitter indicator byte indicates that the initiator is a sensing transmitter, and the receiver indicator byte indicates that the initiator is a sensing receiver. Referring to Table 3, the Sensing Receiver subfield in the Sensing Measurement Parameter field is set to "1", the Sensing Transmitter subfield in the Sensing Measurement Parameter field is set to "1", and it is identified that the sensing measurement parameter information element includes both NDPA sounding information sub-element and TF Sounding information sub-element for the parameter information of the downlink sensing measurement.

In an optional embodiment, the sensing measurement parameter information element includes second order indication information that indicates an execution order of the downlink sensing measurement and the uplink sensing measurement; the second indication information indicates the execution order of NDPA sounding and TF Sounding, for example, the first indication information is "1", indicating that the NDPA sounding process is earlier than the TF Sounding process; the first indication information is "0", indicating that the TF Sounding process is earlier than the NDPA Sounding process.

In an optional embodiment, the first identification byte is carried in an extension element identification field element ID extension of the Measurement Parameter information element, as shown in Table 2.

In the embodiments of the present disclosure, the sensing initiator determines the sensing measurement setup request frame and sends the sensing measurement setup request frame; where the sensing measurement setup request frame includes a first identification byte, which indicates the sensing measurement type of the wireless local area network (WLAN) sensing measurement process. The embodiments of the present disclosure provide an approach to indicate the sensing measurement type of WLAN sensing process, to improve the WLAN sensing process.

Referring to FIG. 8, the embodiments of the present disclosure provide a communication method, which may be optionally performed by an electronic device, and the electronic device may be a sensing responder. The method may include the following steps:
in step 801: a sensing measurement setup request frame is received; where the sensing measurement setup request frame includes a first identification byte, the first identification byte indicates a sensing measurement type of a wireless local area network WLAN sensing measurement process; and the sensing measurement type includes a triggered based, TB-based, frame or a non-triggered based, Non-TB based, frame.

The WLAN Sensing architecture and WLAN Sensing processes applied in the communication method provided in the embodiments of the present disclosure refer to the first example mentioned above and will not be repeated here.

In general, the WLAN sensing process includes processes of a WLAN sensing session setup, a WLAN sensing measurement setup, and a WLAN sensing measurement termination, etc. In the process of the WLAN sensing measurement setup, the sensing initiator determines a Sensing Measurement Setup Request Frame, the sensing responder receives the sensing measurement setup request frame and acquires the first identification byte carried in the sensing measurement setup request frame, where the first identification byte is configured to indicate a sensing measurement type of the WLAN sensing measurement to be set up by the initiator; the sensing measurement type includes a triggered based, TB-based, frame or non-triggered based, Non-TB based, frame. For example, the TB-based approach uses an AP as the initiator (or a transmitter), while the Non-TB based approach uses a STA as the initiator (or a transmitter)

Optionally, one bit may be used in the sensing measurement setup request frame to indicate the sensing measurement type: for example, "0" indicates TB-based, "1" indicates Non-TB Based; or "1" indicates TB-based, "0" indicates Non-TB based.
in step 802: in response to the sensing measurement setup request frame, a sensing measurement response message frame is sent to an initiator.

The sensing responder replies with a sensing measurement response message frame to the initiator according to the sensing measurement type, and determines a subsequent operation to be executed. For example, in a case of TB-based, the responder receives a Null Data Packet Announcement (NDPA) frame or a trigger frame (TF-trigger); in a case of Non-TB Based, the responder receives the NDPA frame.

Optionally, in the embodiments of the present disclosure, the sensing measurement setup request frame includes a sensing measurement parameter information element.

The first identification byte is carried in the sensing measurement parameter information element.

The sensing measurement parameter information element also includes a transmitter indicator byte and a receiver indicator byte. The transmitter indicator byte indicates whether the sensing initiator is a sensing transmitter, and the receiver indicator byte indicates whether the sensing initiator is a sensing receiver, indicating the identity information of the sensing initiator; correspondingly, the sensing responder confirms its own identity information according to the identity information of the sensing initiator. For example, in a case that the sensing initiator is the sensing transmitter, the sensing responder serves as the sensing receiver; in a case that the sensing initiator is the sensing receiver, the sensing responder serves as the sensing transmitter.

Specifically, the sensing measurement response message frame includes a transmitter identification byte and a receiver identification byte.

In a case that the transmitter indicator byte indicates that the initiator is the transmitter, the receiver identification byte indicates that the responder is the receiver. For example, the receiver identification byte (receiver bit) is set to "1";
and/or

In a case that the receiver indicator byte indicates that the initiator is the receiver, the transmitter identification byte indicates that the responder is the transmitter. For example, the receiver identification byte (transmitter bit) is set to "1".

In the embodiments of the present disclosure, the sensing responder receives a sensing measurement setup request frame; in response to the sensing measurement setup request frame, the sensing responder sends a sensing measurement response message frame to the initiator, where the sensing measurement setup request frame includes a first identification byte, and the first identification byte indicates the sensing measurement type of the wireless local area network WLAN sensing measurement process. The embodiments of the present disclosure provide an approach to indicate the sensing measurement type of WLAN sensing process, to improve the WLAN sensing process.

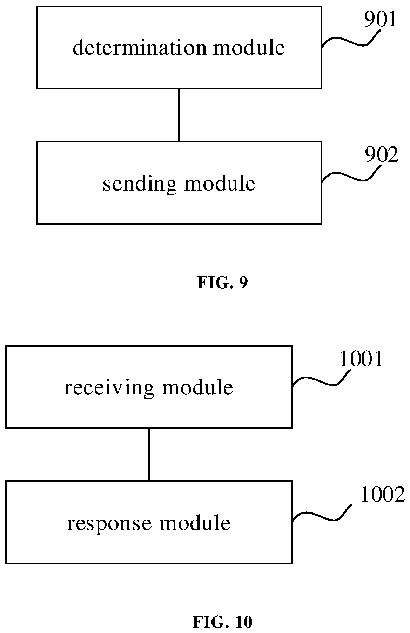

Referring to FIG. 9, based on the same principle as the method provided in the embodiments of the present disclosure, the embodiments of the present disclosure also provide an electronic device, which is a sensing initiator, and the electronic device includes:
a determination module 901, configured to determine a sensing measurement setup request frame; where the sensing measurement setup request frame includes a first identification byte, the first identification byte indicates a sensing measurement type of a wireless local area network WLAN sensing measurement process; and the sensing measurement type includes a triggered based, TB-based, frame or a non-triggered based, Non-TB based, frame;
a sending module 902, configured to send the sensing measurement setup request frame.

Optionally, in the embodiments of the present disclosure, the sensing measurement setup request frame includes a sensing measurement parameter information element.

The first identification byte is carried in the sensing measurement parameter information element.

The sensing measurement parameter information element further includes a transmitter indicator byte and a receiver indicator byte.

Optionally, in the embodiments of the present disclosure, in a case that the first identification byte is a first parameter value, the sensing measurement parameter information element includes a Non-TB based information sub-element, and the WLAN sensing measurement process includes UL sounding.

Optionally, in the embodiments of the present disclosure, the transmitter indicator byte indicates that the initiator is a sensing transmitter, and the receiver indicator byte indicates that the initiator is not a sensing receiver.

The first parameter value identifies that the initiator sends R2I NDP.

Optionally, in the embodiments of the present disclosure, in a case that the first identification byte is a second parameter value, the sensing measurement parameter information element includes a Non-TB based information sub-element, and the WLAN sensing measurement process includes DL sounding.

Optionally, in the embodiments of the present disclosure, the transmitter indicator byte indicates that the initiator is not a sensing transmitter, and the receiver indicator byte indicates that the initiator is a sensing receiver.

The second parameter value identifies that the initiator sends I2R NDP.

Optionally, in the embodiments of the present disclosure, in a case that the first identification byte is a third parameter value, the sensing measurement parameter information element includes a Non-TB based information sub-element, and the WLAN sensing measurement process includes UL sounding and DL sounding.

Optionally, in the embodiments of the present disclosure, the transmitter indicator byte indicates that the initiator is a sensing transmitter, and the receiver indicator byte indicates that the initiator is a sensing receiver.

The third parameter value identifies that the initiator sends I2R NDP and R2I NDP.

Optionally, in the embodiments of the present disclosure, a process of sending the I2R NDP and a process of sending the R2I NDP have a predetermined execution order, or the sensing measurement parameter information element includes first order indication information that indicates an execution order.

Optionally, in the embodiments of the present disclosure, in a case that the first identification byte is a fourth parameter value, the sensing measurement parameter information element includes a TB-based information sub-element, and the WLAN sensing measurement process includes downlink sensing measurement.

Optionally, in the embodiments of the present disclosure, the transmitter indicator byte indicates that the initiator is a sensing transmitter, and the receiver indicator byte indicates that the initiator is not a sensing receive.

Optionally, in the embodiments of the present disclosure, in a case that the first identification byte is a fifth parameter value, the sensing measurement parameter information element includes a TB-based information sub-element, and the WLAN sensing measurement process includes an uplink sensing measurement process.

Optionally, in the embodiments of the present disclosure, the transmitter indicator byte indicates that the initiator is not a sensing transmitter, and the receiver indicator byte indicates that the initiator is a sensing receiver.

Optionally, in the embodiments of the present disclosure, in a case that the first identification byte is a sixth parameter value, the sensing measurement parameter information element includes a TB-based information sub-element, and the WLAN sensing measurement process includes downlink sensing measurement and uplink sensing measurement.

Optionally, in the embodiments of the present disclosure, the transmitter indicator byte indicates that the initiator is a sensing transmitter, and the receiver indicator byte indicates that the initiator is a sensing receiver.

Optionally, in the embodiments of the present disclosure, the sensing measurement parameter information element includes second order indication information that indicates an execution order of the downlink sensing measurement and the uplink sensing measurement.

Optionally, in the embodiments of the present disclosure, the first identification byte is carried in an extension element identification field element ID extension of the Measurement Parameter information element.

In the embodiments of the present disclosure, the determination module 901 determines the sensing measurement setup request frame, and the sending module 902 sends the sensing measurement setup request frame; where the sensing measurement setup request frame includes a first identification byte, which indicates the sensing measurement type of the wireless local area network (WLAN) sensing measurement process. The embodiments of the present disclosure provide an approach to indicate the sensing measurement type of WLAN sensing process, to improve the WLAN sensing process.

The embodiments of the present disclosure also provide a communication apparatus performed by a sensing initiator, the apparatus includes:
a wireless frame determination module, configured to determine a sensing measurement setup request frame; where the sensing measurement setup request frame includes a first identification byte, the first identification byte indicates a sensing measurement type of a wireless local area network WLAN sensing measurement process; and the sensing measurement type includes a triggered based, TB-based, frame or a non-triggered based, Non-TB based, frame;
a wireless frame sending module, configured to send the sensing measurement setup request frame.

The apparatus also includes other modules of the electronic device in the above embodiments, which will not be repeated here.

Referring to FIG. 10, based on the same principle as the method provided in the embodiments of the present disclosure, the embodiments of the present disclosure also provides an electronic device, which is a sensing responder. The electronic device includes:
a receiving module 1001, configured to receive a sensing measurement setup request frame; where the sensing measurement setup request frame includes a first identification byte, the first identification byte indicates a sensing measurement type of a wireless local area network WLAN sensing measurement process; and the sensing measurement type includes a triggered based, TB-based, frame or a non-triggered based, Non-TB based, frame;
a response module 1002, configured to send a sensing measurement response message frame to an initiator in response to the sensing measurement setup request frame.

Optionally, in the embodiments of the present disclosure, the sensing measurement setup request frame includes a sensing measurement parameter information element.

The first identification byte is carried in the sensing measurement parameter information element.

The sensing measurement parameter information element also includes a transmitter indicator byte and a receiver indicator byte.

Optionally, in the embodiments of the present disclosure, the sensing measurement response message frame includes a transmitter identification byte and a receiver identification byte.
in a case that the transmitter indicator byte indicates that the initiator is a transmitter, the receiver identification byte indicates that the responder is a receiver;
   and/or
in a case that the receiver indicator byte indicates that the initiator is a receiver, the transmitter identification byte indicates that the responder is a transmitter.

In the embodiments of the present disclosure, the receiving module 1001 receives a sensing measurement setup request frame; the response module 1002 sends a sensing measurement response message frame to the initiator in response to the sensing measurement setup request frame, where the sensing measurement setup request frame includes a first identification byte, which indicates the sensing measurement type of the wireless local area network (WLAN) sensing measurement process..

The embodiments of the present disclosure also provides a communication apparatus performed by a sensing responder, and the apparatus includes:
a wireless frame receiving module, configured to receive a sensing measurement setup request frame; where the sensing measurement setup request frame includes a first identification byte, the first identification byte indicates a sensing measurement type of a wireless local area network WLAN sensing measurement process; and the sensing measurement type includes a triggered based, TB-based, frame or a non-triggered based, Non-TB based, frame;
a wireless frame response module, configured to send a sensing measurement response message frame to an initiator in response to the sensing measurement setup request frame.

The apparatus also includes other modules of the electronic device in the above embodiments, which will not be repeated here.

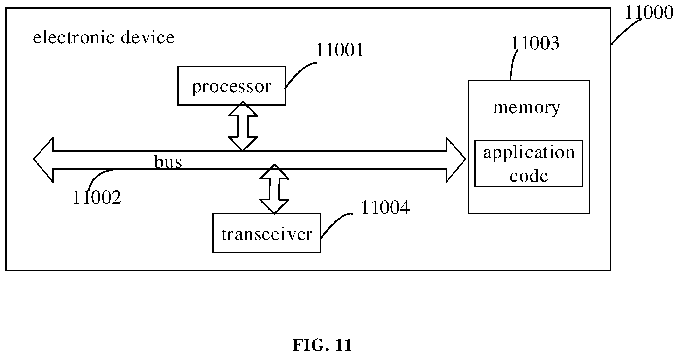

In an optional embodiment, the embodiment of the present disclosure further provides an electronic device, as shown in FIG. 11, the electronic device 11000 shown in FIG. 11 may be a server, including a processor 11001 and a memory 11003. The processor 11001 and the memory 11003 are connected with each other, such as through a bus 11002. Optionally, the electronic device 11000 may further include a transceiver 11004. It should be noted that in actual applications, the number of the transceiver 11004 is not limited to one, and the structure of the electronic device 11000 does not constitute a limitation on the embodiments of the present disclosure.

The processor 11001 may be a Central Processing Unit (CPU), a general-purpose processor, a Digital Signal Processor (DSP), an Application Specific Integrated Circuit (ASIC), a Field Programmable Gate Array (FPGA) or other programmable logic devices, transistor logic devices, hardware components or any combination thereof. It may implement or execute various exemplary logic blocks, modules and circuits described in conjunction with the present disclosure. The processor 11001 may also be a combination, such as a combination of one or more microprocessors, a combination of a DSP and a microprocessor, etc., that implements computing functions.

The bus 11002 may include a path for conveying information between the above components. The bus 11002 may be a Peripheral Component Interconnect (PCI) bus or an Extended Industry Standard Architecture (EISA) bus. The bus 11002 may be divided into an address bus, a data bus, a control bus, etc. For ease of representation, FIG. 11 shows the bus 1102 through only one thick line, but it does not indicate that there is only one bus or one type of bus.

The memory 11003 may be a Read Only Memory (ROM) or other types of static storage devices that may store static information and instructions, a Random Access Memory (RAM) or other types of dynamic storage devices that may store information and instructions, or an Electrically Erasable Programmable Read Only Memory (EEPROM), a Compact Disc Read Only Memory (CD-ROM) or other optical disk storage, optical disc storage (including compact optical disc, laser disc, optical disc, digital versatile optical disc, Blu-ray disc, etc.), a magnetic disk storage medium or other magnetic storage device, or any other medium that may be used to carry or store desired program code in the form of instructions or data structures and may be accessed by a computer, but is not limited thereto.

The memory 11003 is used to store application code for executing the solutions of the present disclosure, and the execution is controlled by the processor 11001. The processor 11001 is used to execute the application code stored in the memory 11003 to implement those shown in the above method embodiments.

The electronic device includes, but is not limited to, mobile terminals such mobile phones, laptop computers, digital broadcast receivers, personal digital assistants (PDAs), tablet computers (PADs), portable multimedia players (PMPs), vehicle-mounted terminals (such as vehicle-mounted navigation terminals), etc., and fixed terminals such as digital TVs, desktop computers, etc. The electronic device shown in FIG. 11 is only an example and should not bring any limitation on the functions and scope of use of the embodiments of the present disclosure.

The server provided by the present disclosure may be an independent physical server, or a server cluster or distributed system composed of multiple physical servers, or may be a cloud server that provides basic cloud computing services such as cloud services, cloud databases, cloud computing, cloud functions, cloud storage, network services, cloud communications, middleware services, domain name services, security services, CDN, and big data and artificial intelligence platforms. The terminal may be a smart phone, tablet computer, laptop computer, desktop computer, smart speaker, smart watch, etc., but is not limited thereto. The terminal and the server may be directly or indirectly connected via wired or wireless communication, which is not limited in the present disclosure.

An embodiment of the present disclosure provides a computer-readable storage medium having stored there a computer program which, when being run on a computer, causes the computer to perform the corresponding contents in the aforementioned method embodiments.

It should be understood that, although the steps in the flowcharts of the accompanying drawings are shown in sequence as indicated by the arrows, these steps are not necessarily performed sequentially in the order as indicated by the arrows. There is no strict restriction on the performing order of these steps, and they may be performed in other orders, unless otherwise stated herein. Moreover, at least a part of the steps in the flowcharts of the accompanying drawings may include multiple sub-steps or multiple stages, and these sub-steps or stages are not necessarily completed at the same time, but may be performed at different times, and the performing order thereof is not necessarily sequential, but may be performed in turn or alternately with other steps or at least a part of the sub-steps or stages of other steps.

It should be noted that the computer-readable medium mentioned above in the present disclosure may be a computer-readable signal medium or a computer-readable storage medium or any combination of the two. The computer-readable storage medium may be, for example, but is not limited to, an electrical, magnetic, optical, electromagnetic, infrared, or semiconductor system, apparatus or device, or any combination of the above. More specific examples of the computer-readable storage medium may include, but is not limited to, an electrical connection with one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium containing or storing a program that may be used by or in combination with an instruction execution system, apparatus or device. In the present disclosure, the computer-readable signal medium may include a data signal propagated in a baseband or as part of a carrier wave, which carries computer-readable program code. The propagated data signal may take a variety of forms, including but not limited to electromagnetic signals, optical signals, or any suitable combination of the above. The computer readable signal medium may also be any computer readable medium other than the computer readable storage medium, which may send, propagate or transmit a program for use by or in conjunction with an instruction execution system, apparatus or device. The program code contained on the computer readable medium may be transmitted using any appropriate medium, including but not limited to: wires, optical cables, RF (radio frequency), etc., or any suitable combination of the above.

The computer-readable medium may be included in the electronic device, or may exist independently without being provided in the electronic device.

The computer-readable medium carries one or more programs which, when being executed by the electronic device, cause the electronic device to perform the methods shown in the above embodiments.

According to an aspect of the present disclosure, a computer program product or a computer program is provided, the computer program product or the computer program includes computer instructions, and the computer instructions are stored in a computer-readable storage medium. A processor of a computer device reads the computer instructions from the computer-readable storage medium, and the processor executes the computer instructions, to cause the computer device to perform the methods provided in the above various optional implementations.

The computer program code for performing the operations of the present disclosure may be written in one or more programming languages, or a combination thereof, including object-oriented programming languages, such as Java, Smalltalk, C++, and conventional procedural programming languages, such as "C" language or similar programming languages. The program code may be executed entirely on the user's computer, partially executed on the user's computer, executed as a separate software package, executed partially on the user's computer and partially on a remote computer, or executed entirely on a remote computer or server. In the cases involving a remote computer, the remote computer may be connected to the user's computer through any type of network, including a local area network (LAN) or a wide area network (WAN), or may be connected to an external computer (e.g., via Internet using an Internet service provider).

The flow charts and block diagrams in the accompanying drawings illustrate the possible architectures, functions and operations of the system, method and computer program product according to various embodiments of the present disclosure. In this regard, each of the blocks in the flow charts or block diagrams may represent a module, a program segment or part of code, and the module, the program segment or the part of code contains one or more executable instructions for realizing the specified logical functions. It should also be noted that in some alternative implementations, the functions marked in the blocks may also occur in a sequence different from that marked in the accompanying drawings. For example, two blocks shown in succession may actually be executed substantially in parallel, or they may sometimes be executed in the opposite order, depending on the functions involved. It should also be noted that each block in the block diagrams and/or flow charts, and the combination of the blocks in the block diagrams and/or flow charts may be implemented with a dedicated hardware-based system that performs a specified function or operation, or may be implemented with a combination of dedicated hardware and computer instructions.

The modules involved in the embodiments described in the present disclosure may be implemented in software or in hardware. The names of the modules do not make limitation on the modules themselves in some cases. For example, A module may also be described as "A module for performing operation B".

Those described above are only explanations of preferred embodiments of the present disclosure and the technical principles employed. Those skilled in the art should understand that the scope of disclosure involved in the present disclosure is not limited to the technical solutions formed by the above specific combination of the technical features, but should also cover other technical solutions formed by any combination of the above technical features or their equivalent features without departing from the above disclosed concept, for example, a technical solution formed by replacing the above features with the technical features with similar functions disclosed in the present disclosure (but not limited to).

## Claims

1. A communication method, performed by a sensing initiator, comprising:
determining a sensing measurement setup request frame; wherein the sensing measurement setup request frame comprises a first identification byte, the first identification byte indicates a sensing measurement type of a wireless local area network WLAN sensing measurement process; and the sensing measurement type comprises a triggered based, TB-based, frame or a non-triggered based, Non-TB based, frame and
sending the sensing measurement setup request frame.

2. The communication method as claimed in claim 1, wherein the sensing measurement setup request frame comprises a sensing measurement parameter information element;
the first identification byte is carried in the sensing measurement parameter information element, and
the sensing measurement parameter information element further comprises a transmitter indicator byte and a receiver indicator byte.

3. The communication method as claimed in claim 2, wherein in a case that the first identification byte is a first parameter value, the sensing measurement parameter information element comprises a Non-TB based information sub-element, and the WLAN sensing measurement process comprises UL sounding.

4. The communication method as claimed in claim 3, wherein the transmitter indicator byte indicates that the initiator is a sensing transmitter, and the receiver indicator byte indicates that the initiator is not a sensing receiver; and
the first parameter value identifies that the initiator sends R2I NDP.

5. The communication method as claimed in claim 2, wherein in a case that the first identification byte is a second parameter value, the sensing measurement parameter information element comprises a Non-TB based information sub-element, and the WLAN sensing measurement process comprises DL sounding.

6. The communication method as claimed in claim 5, wherein the transmitter indicator byte indicates that the initiator is not a sensing transmitter, and the receiver indicator byte indicates that the initiator is a sensing receiver; and
the second parameter value identifies that the initiator sends I2R NDP.

7. The communication method as claimed in claim 2, wherein in a case that the first identification byte is a third parameter value, the sensing measurement parameter information element comprises a Non-TB based information sub-element, and the WLAN sensing measurement process comprises UL sounding and DL sounding.

8. The communication method as claimed in claim 7, wherein the transmitter indicator byte indicates that the initiator is a sensing transmitter, and the receiver indicator byte indicates that the initiator is a sensing receiver; and
the third parameter value identifies that the initiator sends I2R NDP and R2I NDP.

9. The communication method as claimed in claim 8, wherein a process of sending the I2R NDP and a process of sending the R2I NDP have an execution order predetermined, or the sensing measurement parameter information element comprises first order indication information indicates the execution order.

10. The communication method as claimed in claim 2, wherein in a case that the first identification byte is a fourth parameter value, the sensing measurement parameter information element comprises a TB-based information sub-element, and the WLAN sensing measurement process comprises downlink sensing measurement.

11. The communication method as claimed in claim 10, wherein the transmitter indicator byte indicates that the initiator is a sensing transmitter, and the receiver indicator byte indicates that the initiator is not a sensing receiver.

12. The communication method as claimed in claim 2, wherein in a case that the first identification byte is a fifth parameter value, the sensing measurement parameter information element comprises a TB-based information sub-element, and the WLAN sensing measurement process comprises an uplink sensing measurement process.

13. The communication method as claimed in claim 12, wherein the transmitter indicator byte indicates that the initiator is not a sensing transmitter, and the receiver indicator byte indicates that the initiator is a sensing receiver.

14. The communication method as claimed in claim 2, wherein in a case that the first identification byte is a sixth parameter value, the sensing measurement parameter information element comprises a TB-based information sub-element, and the WLAN sensing measurement process comprises downlink sensing measurement and uplink sensing measurement.

15. The communication method as claimed in claim 14, wherein the transmitter indicator byte indicates that the initiator is a sensing transmitter, and the receiver indicator byte indicates that the initiator is a sensing receiver.

16. The communication method as claimed in claim 14, wherein the sensing measurement parameter information element comprises second order indication information indicating an execution order of the downlink sensing measurement and the uplink sensing measurement.

17. The communication method as claimed in any one of claims 2 to 16, wherein the first identification byte is carried in an extension element identification field element ID extension of the measurement parameter information element.

18. A communication method, performed by a sensing responder, comprising:
receiving a sensing measurement setup request frame; wherein the sensing measurement setup request frame comprises a first identification byte, the first identification byte indicates a sensing measurement type of a wireless local area network WLAN sensing measurement process; and the sensing measurement type comprises a triggered based, TB-based, frame or a non-triggered based, Non-TB based, frame ; and
sending, in response to the sensing measurement setup request frame, a sensing measurement response message frame to an initiator.

19. The communication method as claimed in claim 18, wherein the sensing measurement setup request frame comprises a sensing measurement parameter information element;
the first identification byte is carried in the sensing measurement parameter information element, and
the sensing measurement parameter information element further comprises a transmitter indicator byte and a receiver indicator byte.

20. The communication method as claimed in claim 19, wherein the sensing measurement response message frame comprises a transmitter identification byte and a receiver identification byte;
in a case that the transmitter indicator byte indicates that the initiator is a transmitter, the receiver identification byte indicates that the responder is a receiver;
and/or
in a case that the receiver indicator byte indicates that the initiator is a receiver, the transmitter identification byte indicates that the responder is a transmitter.

21. A communication apparatus, performed by a sensing initiator, comprising:
a wireless frame determination module, configured to determine a sensing measurement setup request frame; wherein the sensing measurement setup request frame comprises a first identification byte, the first identification byte indicates a sensing measurement type of a wireless local area network WLAN sensing measurement process; and the sensing measurement type comprises a triggered based, TB-based, frame or a non-triggered based, Non-TB based, frame; and
a wireless frame sending module, configured to send the sensing measurement setup request frame.

22. A communication apparatus, performed by a sensing responder, comprising:
a wireless frame receiving module, configured to receive a sensing measurement setup request frame; wherein the sensing measurement setup request frame comprises a first identification byte, the first identification byte indicates a sensing measurement type of a wireless local area network WLAN sensing measurement process; and the sensing measurement type comprises a triggered based, TB-based, frame or a non-triggered based, Non-TB based, frame;
a wireless frame response module, configured to send a sensing measurement response message frame to an initiator in response to the sensing measurement setup request frame.

23. An electronic device comprising a memory, a processor, and a computer program stored on the memory and executable on the processor, wherein the processor, when executing the program, implements the method as claimed in any one of claims 1 to 20.

24. A computer-readable storage medium having a computer program stored thereon, and when the computer program is executed by a processor, the method as claimed in any one of claims 1 to 20 is implemented.
